# EUROPÄISCHE PATENTSCHRIFT

(11) **EP 1 103 418 B1**
(45) Veröffentlichungstag und Bekanntmachung des Hinweises auf die Patenterteilung: **17.01.2007**
(21) Anmeldenummer: 00124797.2
(22) Anmeldetag: 14.11.2000
(51) Int. Cl.: B60Q 1/08, B60Q 1/52, G01N 21/53, G01S 17/95

(54) **Verfahren zur Sichtweitenmessung**
Method for measuring visual range
Procédé pour mesurer la visibilité

(30) Priorität: 17.11.1999 DE 19955249
(43) Veröffentlichungstag der Anmeldung: 30.05.2001
(73) Patentinhaber: ROBERT BOSCH GMBH, 70442 Stuttgart (DE)
(72) Erfinder: Klinnert, Roland, 70825 Korntal-Münchingen (DE); Imhof, Volker, 70806 Kornwestheim (DE); Schmidt, Hauke, 9430 Palo Alto (US)

(56) Entgegenhaltungen:
- DE-A- 19 629 712
- US-A- 3 782 824
- US-A- 5 118 180

## Beschreibung

### Stand der Technik

Die vorliegende Erfindung betrifft ein Verfahren zur Sichtweitenmessung, insbesondere für Kraftfahrzeuge, wobei in einen Sichtweiten-Meßraum Licht ausgesendet, das im Meßraum rückgestreute Licht gemessen wird und die Zugehörigkeiten des Meßsignals zu mehreren vorgegebenen Sichtweitenklassen ermittelt werden.

Ein derartiges Verfahren ist aus der DE 196 29 712 A1 bekannt. Hierbei wird nach dem LIDAR-Prinzip eine Rückstreumessung durchgeführt. Dabei strahlt ein Lichtsender (z.B. ein Laser oder eine Fotodiode) Lichtimpulse in die vor einem Fahrzeug liegende Umgebung ab. Je nach dem sich in der Umgebung vor dem Fahrzeug befindenden Streumedium (z.B., Nebel, Schnee, Regen, Rauch etc.) wird ein mehr oder weniger großer Anteil des Lichts nach der Wechselwirkung mit dem Streumedium rückgestrahlt und von einem oder mehreren Empfangselementen (z.B. Fotodiode) aufgenommen. Aus dem Verhältnis von ausgestrahltem zu detektiertem Licht wird die Sichtweite ermittelt. In der DE 196 29 712 A1 wird vorgeschlagen, die Meßsignale des rückgestreuten Lichts in Sichtweitenklassen (z.B. 50m, 100m, 150m usw.) einzuteilen.

Dazu werden die Sichtweitenklassen mit Hilfe einer Fuzzy-Methode durch Referenzmessungen gebildet und die Zugehörigkeiten des jeweils aktuellen Meßsignals zu den einzelnen Sichtweitenklassen ermittelt. Schließlich wird diejenige Sichtweitenklasse, für die das aktuelle Meßsignal die höchste Zugehörigkeit hat, als tatsächliche Sichtweite angenommen.

Der Erfindung liegt die Aufgabe zugrunde, ein Verfahren der eingangs genannten Art anzugeben, mit dem eine störungsfreie kontinuierliche Messung der Sichtweite möglich ist.

### Vorteile der Erfindung

Für die genannte Aufgabe gibt es drei Lösungsvarianten gemäß den Ansprüchen 1, 2 und 3.

Gemäß den Merkmalen des Anspruchs 1 werden ein zu jeder von mehreren zuvor bestimmten Sichtweitenklassen gehörender Merkmalsbereich, die die Schwerpunkte der einzelnen Sichtweitenklassen bildenden Meßpunkte und Meßpunkte, welche die Punkte von Verbindungslinien zwischen den Schwerpunkten der aufeinanderfolgenden Sichtweitenklassen bilden, ermittelt. Jeder einzelne Meßpunkt hängt von einem oder mehreren Merkmalen ab, die aus einem oder mehreren Abtastwerten eines Referenzmeßsignals abgeleitet worden sind. Nach der gleichen Methode wie die Meßpunkte der Sichtweitenklassen bestimmt worden sind, wird ein von ein oder mehreren Merkmalen abhängiger aktueller Meßpunkt gebildet, wobei die Merkmale aus ein oder mehreren Abtastwerten eines aktuellen Meßsignals abgeleitet werden. Vom jeweils akutell ermittelten Meßpunkt wird eine Projektion auf diejenige Verbindungslinie durchgeführt, welche die Schwerpunkte derjenigen beiden Sichtweitenklassen miteinander verbindet, für die das Meßsignal die beiden höchsten Zugehörigkeiten aufweist. Dem Projektionspunkt auf der Verbindungslinie wird schließlich die aktuelle Sichtweite zugeordnet.

Gemäß der Lösung nach Anspruch 2 werden der zu jeder Sichtweitenklasse gehörende Merkmalsbereich und die die Schwerpunkte der einzelnen Sichtweitenklassen bildenden Meßpunkte ermittelt, wobei jeder einzelne Meßpunkt von ein oder mehreren Merkmalen abhängt, die aus einem oder mehreren Abtastwerten eines Referenzmeßsignals abgeleitet sind. Nach der gleichen Methode, wie die Meßpunkte der Sichtweitenklasse bestimmt werden, wird ein von einem oder mehreren Merkmalen abhängiger aktueller Meßpunkt gebildet, wobei die Merkmale aus einem oder mehreren Abtastwerten eines aktuellen Meßsignals abgeleitet werden. Der Abstand zwischen dem jeweils aktuell ermittelten Meßpunkt und dem Schwerpunkt derjenigen Sichtweitenklasse wird berechnet, für die der aktuelle Meßpunkt die höchste Zugehörigkeit hat. Dem ermittelten Abstand wird ein Korrekturwert zugeordnet, um den die Sichtweite der Klasse mit der höchsten Zugehörigkeit erhöht oder erniedrigt wird, um somit zu der tatsächlichen Sichtweite zu gelangen. Dabei wird die Sichtweite mit der höchsten Zugehörigkeit erhöht/erniedrigt, wenn die Sichtweitenklasse mit der zweitgrößten Zugehörigkeit oberhalb/unterhalb der Sichtweite mit der höchsten Zugehörigkeit liegt.

Gemäß einer dritten Lösungsvariante nach Anspruch 3 werden der zu jeder Sichtweitenklasse gehörende Merkmalsbereich und die die Schwerpunkte der einzelnen Sichtweitenklassen bildenden Meßpunkte ermittelt, wobei jeder einzelne Meßpunkt von einem oder mehreren Merkmalen abhängt, die aus einem oder mehreren Abtastwerten eines Referenzmeßsignals abgeleitet sind. Nach der gleichen Methode, wie die Meßpunkte der Sichtweitenklassen bestimmt worden sind, wird ein von einem oder mehreren Merkmalen abhängiger aktueller Meßpunkt gebildet, wobei die Merkmale aus einem oder mehreren Abtastwerten eines aktuellen Meßsignals abgeleitet werden. Die für den jeweils aktuell erfaßten Meßpunkt ermittelten Zugehörigkeiten zu allen Sichtweitenklassen werden mit Wichtungsfaktoren multipliziert. Die Wichtungsfaktoren werden zuvor so gewählt, daß bei einer Multiplikation der Wichtungsfaktoren mit den Zugehörigkeiten eines in den Schwerpunkt einer Sichtweitenklasse fallenden aktuellen Meßpunktes und nach anschließender Summation der gewichteten Zugehörigkeiten eine Sichtweite resultiert, die gleich der Sichtweitenklasse ist. Aus allen gewichteten Zugehörigkeiten wird die Summe gebildet, welche dann als aktuelle Sichtweite angenommen wird.

Bei den aufgeführten drei Verfahren werden aus den Abtastwerten jedes Sichtweitenmeßsignals Merkmale berechnet, die mehrere Abtastwerte miteinander verknüpfen. Ein Merkmal, das beispielsweise aus dem Verhälnis zweier Abtastwerte gebildet wird, hat den Vorteil, daß es gegenüber der Art des die Sichtweite beeinflussenden Mediums (z.B. Nebelart) oder der Leistung des Sendeelements oder einer verschmutzten Fahrzeug-Frontscheibe, hinter der der Sichtweitensensor angeordnet ist, unempfindlich ist, weil die beide Abtastwerte in gleichem Maße von den genannten Einflußgrößen verändert werden. Zwischen einem solchen Merkmal und einer realen Sichtweite besteht ein nichtlinearer Zusammenhang. Diese Nichtlinearität kann mit der genannten Sichtweitenklassifikation umgangen werden. Nachdem die im Merkmalsraum liegenden Sichtweitenklassen durch einen Lernprozess gebildet worden sind, wird für jedes aus Abtastwerten eines Meßsignals gebildete Merkmal eine Zugehörigkeit zu allen Sichtweitenklassen im Merkmalsraum berechnet. Dieser Vorgang entspricht im Grunde einer Transformation vom Merkmalsraum in einen Zugehörigkeitsraum. In diesem Zugehörigkeitsraum kann nun durch lineare Berechnungsmethoden eine Sichtweite ermittelt werden.

Vorteilhafte Weiterbildungen der Erfindung gehen aus den Ansprüchen hervor.

Danach können die Merkmale durch Linearkombination oder Mittelwertbildung oder Quotientenbildung oder Streuungsberechnung von mehreren Meßsignal-Abtastwerten gebildet werden. Es kann aber auch jedes Merkmal direkt einem Meßsignal-Abtastwert entsprechen.

### Zeichnung

Anhand mehrerer in der Zeichnung dargestellter Ausführungsbeispiele wird anschließend die Erfindung näher erläutert. Es zeigen:
Figur 1 eine Vorrichtung zur Sichtweitenmessung,
Figur 2 ein Ablaufdiagramm einer ersten Methode zur Sichtweitenmessung,
Figur 3 Sichtweitenklassen in einem zweidimensionalen Merkmalsraum,
Figur 4 ein Ablaufdiagramm einer zweiten Methode zur Sichtweitenmessung,
Figur 5 Sichtweitenklassen in einem zweidimensionalen Merkmalsraum,
Figur 6 ein Ablaufdiagramm einer dritten Methode zur Sichtweitenmessung und
Figur 7 Zugehörigkeitsfunktionen von drei Sichtweitenklassen.

Beschreibung von Ausführungsbeispielen

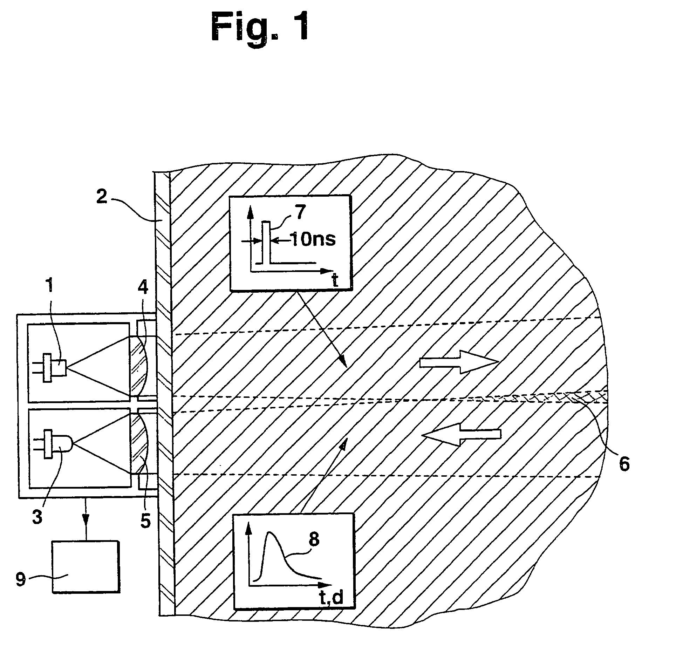

Die Figur 1 zeigt eine Anordnung, mit der die Sichtweite im Bereich vor einem Fahrzeug gemessen werden soll. Die Anordnung arbeitet nach dem bekannten LIDAR (Light Detecting and Ranging) Prinzip. Sie besitzt ein Sendeelement 1, (z.B. eine IR-Laserdiode), welche aus dem Inneren des Fahrzeugs heraus durch die Windschutzscheibe 2 Lichtimpulse in den Bereich vor dem Fahrzeug abstrahlt, und mindestens ein optisches Empfangselement 3 (z.B. PIN-Diode), welches das an dem vor dem Fahrzeug befindlichen Streumedium (z.B. Regen, Nebel, Schnee, Rauch, etc.) rückgestreute Licht aufnimmt und in ein elektrisches Signal umwandelt. Vor dem optischen Sendeelement 1 und vor dem optischen Empfangselement 3 sind jeweils eine Fokussierlinse 4 und 5 angeordnet, um einerseits das ausgesendete Licht auf einen räumlich begrenzten Lichtstrahl einzuschränken und andererseits das rückgestreute Licht auf das Empfangselement 3 zu fokussieren. In der Figur 1 ist die räumliche Begrenzung der beiden mit Pfeilen gekennzeichneten Lichtstrahlen durch strichlierte Linien angedeutet.

Die optischen Achsen des Sendeelements 1 und des Empfangselements 3 sind so zueinander ausgerichtet, daß der Sendestrahl und der Empfangsstrahl einen in der Figur 1 kreuzschraffierten Überlappungsbereich 6 bilden. Somit nimmt das Empfangselement 3 den Teil des ausgesendeten Lichts auf, welches am Streumedium, das in der Figur 1 durch eine diagonale Schraffierung angedeutet ist, im Überlappungsbereich 6 rückgestreut wird. Wie in der Figur 1 eingezeichnet, strahlt das Sendeelement 1 einen kurzen Lichtimpuls 7 von ca. 10 Nannosekunden aus. Der zeitliche Verlauf 8 des von dem ausgesendeten Lichtimpuls 7 rückgestreuten Anteils ist ebenfalls in der Figur 1 dargestellt. Die zeitliche Abhängigkeit der Amplitude des vom Empfangselement 3 aufgenommenen Rückstreulichtes steht in einem direkten Zusammenhang mit der Entfernung der Raumzone, aus der das rückgestreute Licht stammt. D.h, je weiter die Raumzone vom Empfangselement 3 entfernt ist, desto geringer ist der rückgestreute Anteil des Sendelichtimpulses 7, und je kürzer die Entfernung der Raumzone zum Empfangselement 7 ist, desto höher ist der an dieser Raumzone rückgestreute Anteil des ausgesendeten Lichtimpulses 7. Statt wie in der Figur 1 dargestellt, mit einem einzigen optischen Empfangselement 3 einen Rückstreulichtverlauf 8 in Abhängigkeit des Abstandes unterschiedlich weit entfernter Raumzonen aufzunehmen, kann auch wie in der DE 196 29 712 A1 beschrieben, mit mehreren Empfangselementen, Rückstreulicht aus unterschiedlich beabstandeten Raumzonen aufgenommen werden. Dabei weisen die optischen Achsen der Empfangselemente unterschiedliche Winkel zur optischen Achse des Sendeelements auf.

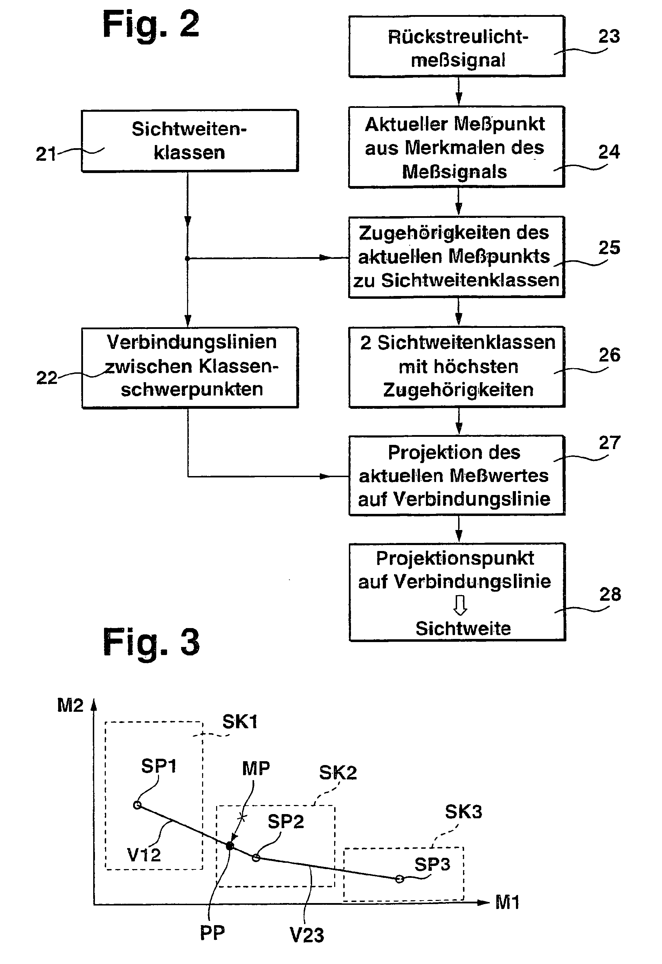

An das Empfangselement 3 ist eine Auswerteeinheit 9 angeschlossen, welche aus dem Ausgangssignal des das Rückstreulicht aufnehmenden Empfangselements 3 die Sichtweite im Bereich vor dem Fahrzeug ermittelt. In den Figuren 2, 4 und 6 sind die Ablaufdiagramme von drei verschiedenen Methoden dargestellt, nach denen die Auswerteeinheit 9 aus dem Ausgangssignal des optischen Empfangselements 3 die aktuelle Sichtweite ermitteln kann.

Vor der eigentlichen (Online) Sichtweitenmessung werden (Offline) in einem ersten Verfahrensschritt 21 Sichtweitenklassen nach der sogenannten Fuzzypattern-Methode ermittelt. Diese Fuzzypattern-Methode ist bekannt aus U. Prieber: "Verarbeitung multisensorieller Informationen mit Fuzzy-Klassifikation", 3.Symposium Mikrosystemtechnik, Mikrosysteme für Verfahrens- und Fertigungstechnik, Regensburg 1993, S. 169-179.

In der Figur 3 sind beispielsweise drei Sichtweitenklassen SK1, SK2 und SK3 in einem zweidimensionalen Merkmalsraum dargestellt. Die Sichtweitenklasse SK1 ist z.B. einer Sichtweite von 50m, die Sichtweitenklasse SK2 einer Sichtweite von 100m und die Sichtweitenklasse SK3 einer Sichtweite von 150m zugeordnet. Die strichliert umrandeten Gebiete begrenzen die Merkmalsbereiche der einzelnen Sichtweitenklassen SK1, SK2 und SK3. In dem in der Figur 3 dargestellten Ausführungsbeispiel befinden sich die Sichtweitenklassen SK1, SK2, SK3 in einen zweidimensionalen Merkmalsraum. D.h., daß jeder Meßpunkt im Merkmalsraum von zwei Merkmalen M1 und M2 abhängt. Jeder Meßpunkt kann aber auch nur von einem Merkmal oder auch von mehr als nur zwei Merkmalen abhängen. Die einzelnen Merkmale M1, M2 entsprechen entweder direkt jeweils einem von mehreren zeitlich aufeinanderfolgenden Abtastwerten des vom Empfangselement 3 aufgenommenen Meßsignals 8, oder die Merkmale M1, M2 werden z.B. durch Linearkombinationen oder Mittelwertbildung oder Streuungsberechnung oder Quotientenbildung aus mehreren Abtastwerten eines Meßsignals gebildet.

Wenn die Merkmale nicht direkt den Abtastwerten des Meßsignals entsprechen, sondern durch eine der genannten Operationen daraus abgeleitet werden, lassen sich einerseits bestimmte Fehlerquellen bei der Sichtweitenmessung eliminieren. Diese sind z.B. eine Sendeleistungsveränderung des ausgestrahlten Lichts, beispielsweise aufgrund von Temperaturänderungen oder Alterungen des Sendeelements, oder eine Verschmutzung der den Sende- und Empfangselementen vorgeschalteten Optiken oder eine Verschmutzung der Frontscheibe des Kraftfahrzeugs, durch welche die ausgesendeten und empfangenen Lichtimpulse hindurchtreten. Gerade solche Störeinflüsse, die sich auf die Amplitude des Empfangssignals auswirken, können durch Merkmale, welche aus mehreren Abtastwerten des Meßsignals hergeleitet werden, unterdrückt werden. Andererseits erzielt man mit Merkmalen, die z.B. durch eine Mittelwertbildung mehrerer aufeinanderfolgender Messungen hervorgegangen sind, eine wesentliche Verbesserung des Signal-Rausch-Verhältnisses. Dies ist notwendig, da es auf dem Übertragungsweg des Lichts Störgrößen gibt, welche die Empfangssignale und damit die Meßergebnisse der Sichtweite verfälschen.

Die in der Figur 3 beispielhaft dargestellten Sichtweitenklassen werden vor dem eigentlichen aktuellen Sichtweitenmeßvorgang durch Referenzmessungen gebildet. Mit anderen Worten werden die Sichtweitenklassen SK1, SK2, SK3 in einem Lernprozeß z.B. durch Sichtweitenmessungen im Nebel oder Entfernungsmessungen von Gegenständen, deren Entfernungen im Meßraum bekannt sind, gebildet.

Im Verfahrensschritt 22 werden zunächst von jeder Sichtweitenklassse SK1, SK2 und SK3 die Schwerpunkte SP1, SP2 und SP3 ermittelt. Anschließend werden Verbindungslinien V12 und V23 zwischen den Schwerpunkten SP1, SP2, SP3 der einzelnen Sichtweitenklassen SK1, SK2 SK3 gelegt. Die Punkte auf den einzelnen Verbindungslinien V12 und V23 bilden praktisch Zwischenwerte der Sichtweiten zwischen den den einzelnen Sichtweitenklassen SK1, SK2 und SK3 zugeordneten Sichtweiten (z.B. 50m, 100m, 150m).

Die Online ablaufende aktuelle Sichtweitenmessung geschieht nun folgendermaßen. Gemäß dem Verfahrensschritt 23 wird zunächst vom Empfangselement 3 das Rückstreulicht gemessen. Dann werden im Verfahrensschritt 24 aus dem aktuellen Meßsignal ein oder mehrere Merkmale berechnet. Diese Merkmale definieren dann einen aktuellen Meßpunkt. Daraufhin werden im Verfahrensschritt 25 die Zugehörigkeiten dieses aktuellen Meßpunktes zu allen Sichtweitenklassen SK1, SK2 und SK3 ermittelt. Im nächsten Verfahrensschritt 26 werden die beiden Sichtweitenklassen ausgewählt, für die der aktuelle Meßpunkt die höchsten Zugehörigkeiten besitzt. Im Verfahrensschritt 27 erfolgt eine Projektion des aktuellen Meßpunktes auf die Verbindungslinie. Die Figur 3 verdeutlicht diesen Vorgang. Dort ist ein aktueller Meßpunkt MP eingezeichnet, dessen höchste Zugehörigkeit in die Sichtweitenklasse SK2 fällt. Die Sichtweitenklassse SK1 ist diejenige mit der zweithöchsten Zugehörigkeit für den Meßpunkt MP. Durch Projektion des Meßpunktes MP auf die Verbindungslinie V12 zwischen diesen beiden Sichtweitenklassen SK2 und SK1 erhält man den Projektionspunkt PP auf der Verbindungslinie V12. Diesem Projektionspunkt PP wird nun die tatsächliche aktuelle Sichtweite (ein Zwischenwert zwischen den Sichtweitenklassen SK2 und SK1) zugeordnet.

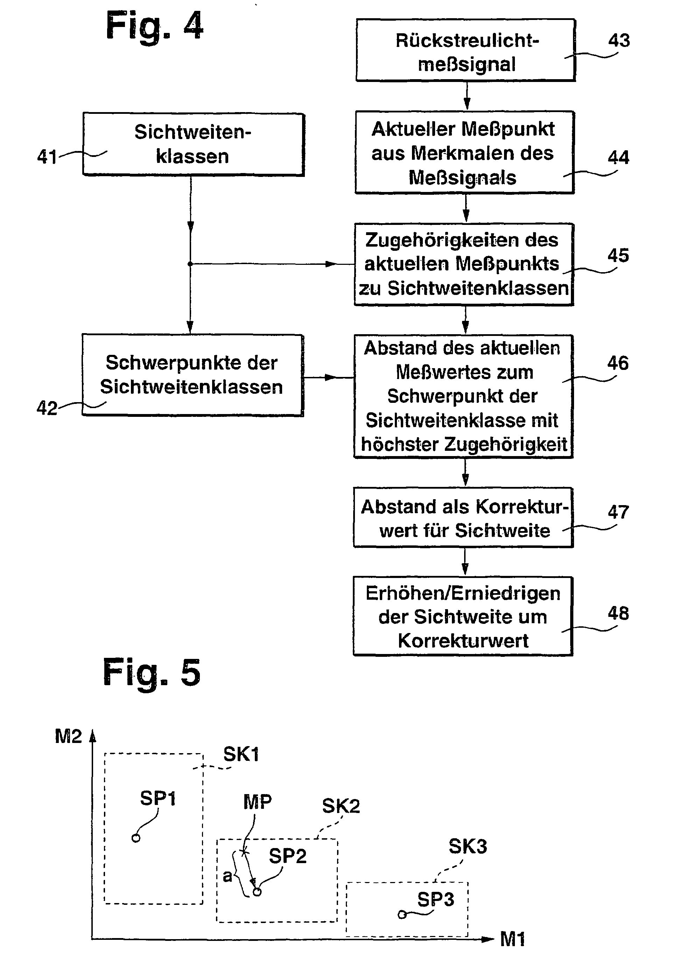

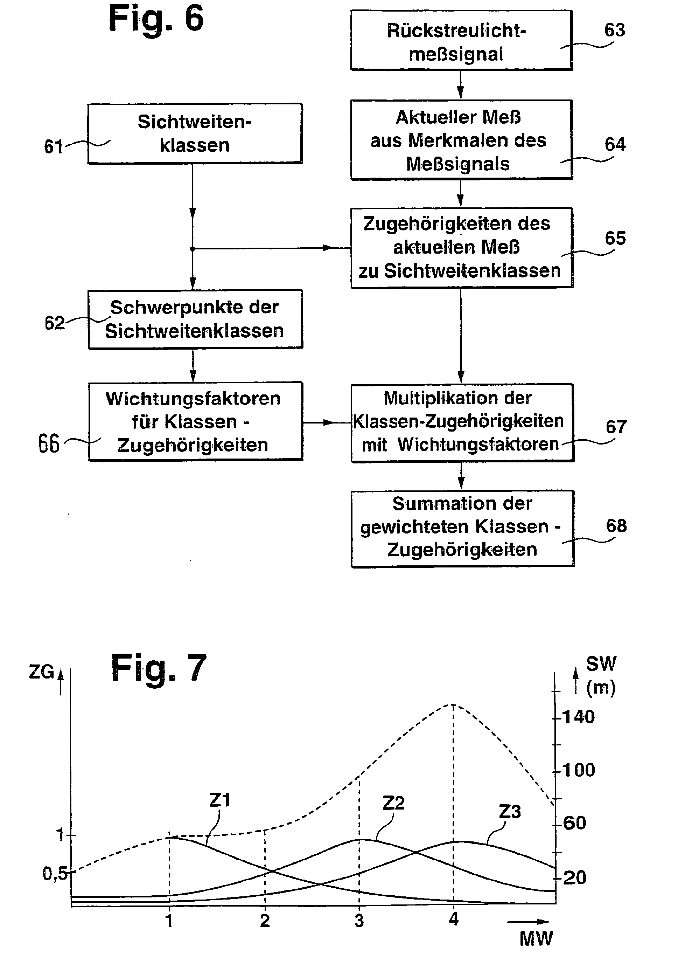

Eine zweite Methode zur Sichtweitenbestimmung erfolgt nach dem in der Figur 4 dargestellten Ablaufdiagramm. Wie bereits im Zusammenhang mit Figur 2 und 3 beschrieben, werden außerhalb des aktuellen Meßvorgangs im Verfahrensschritt 41 die Sichtweitenklassen SK1, SK2 und SK3 gebildet und im Verfahrensschritt 42 die Schwerpunkte SP1, SP2 und SP3 der einzelnen Sichtweitenklassen SK1, SK2 und SK3 ermittelt. Jeder aktuelle Meßvorgang beginnt mit dem Verfahrensschritt 43, bei dem zunächst vom Empfangselement 3 das Rückstreulicht gemessen wird. Danach werden im Verfahrensschritt 44 Merkmale aus Abtastwerten des Meßsignals hergeleitet und ein davon abhängiger aktueller Meßpunkt bestimmt. Im folgenden Verfahrensschritt 45 werden die Zugehörigkeiten des aktuellen Meßpunktes zu allen Sichtweitenklassen SK1, SK2 und SK3 bestimmt. Im darauffolgenden Verfahrensschritt 46 wird, wie auch in der Figur 5 verdeutlicht, der Abstand a des aktuellen Meßpunktes MP gegenüber dem Schwerpunkt SP2 der Sichtweitenklasse mit der höchsten Zugehörigkeit ermittelt. In diesem Fall ist das die Sichtweitenklasse SK2. Der Abstand a stellt einen Korrekturwert dar, mit dem die zu der Sichtweitenklasse SK2 gehörende Sichtweite beaufschlagt wird, um so zur tatsächlichen Sichtweite zu gelangen. Ob die Sichtweite der Sichtweitenklasse SK2 mit der höchsten Zugehörigkeit für den Meßpunkt MP um den Korrekturwert a erhöht oder erniedrigt werden muß, wird im Verfahrensschritt 48 entschieden. Eine Erhöhung der Sichtweite um den Korrekturwert a wird dann vorgenommen, wenn die Sichtweitenklasse mit der zweitgrößten Zugehörigkeit oberhalb der Sichtweitenklasse mit der höchsten Zugehörigkeit liegt. In dem dargestellten Ausführungsbeispiel wäre die Sichtweitenklasse SK1 diejenige mit der zweitgrößten Zugehörigkeit, und diese Sichtweitenklasse SK1 (50m) liegt unterhalb der Sichtweitenklasse SK2 (100m) mit der höchsten Zugehörigkeit. Hier wäre also die Sichtweite der Sichtweitenklasse SK2 um den Korrekturwert a zu erniedrigen. Eine Erhöhung der Sichtweite der Sichtweitenklasse mit der höchsten Zugehörigkeit um den Korrekturwert a wäre dann vorzunehmen, wenn die Sichtweitenklasse mit der zweitgrößten Zugehörigkeit oberhalb der Sichtweitenklasse mit der höchsten Zugehörigkeit läge.

Eine dritte Methode zur Sichtweitenmessung stellt das Ablaufdiagramm in der Figur 6 dar. Genauso wie in den Verfahrensschritten 21 und 22 sowie 41 und 42 werden die Sichtweitenklassen SK1, SK2 und SK3 und deren Schwerpunkte SP1, SP2 und SP3 in den Verfahrensschritten 61 und 62 ermittelt. Das aktuelle Meßverfahren beginnt im Verfahrensschritt 63 wiederum damit, daß das Rückstreulicht gemessen wird. Im Verfahrensschritt 64 werden, wie bereits beschrieben, Merkmale aus Abtastwerten des Meßsignals bestimmt und in Abhängigkeit von diesen Merkmalen ein aktueller Meßpunkt ermittelt. Anschließend werden im Verfahrensschritt 65 die Zugehörigkeiten dieses aktuellen Meßpunktes zu allen Sichtweitenklassen ermittelt. Im Verfahrensschritt 66 werden Wichtungsfaktoren für die Klassen-Zugehörigkeiten gebildet. Und zwar werden die Wichtungsfaktoren so gewählt, daß bei einer Multiplikation der Zugehörigkeiten eines in den Schwerpunkt einer Sichtweitenklasse fallenden aktuellen Meßpunktes und nach anschließender Summation der gewichteten Zugehörigkeiten eine Sichtweite resultiert, die gleich der Sichtweitenklasse ist. Dies sei nochmals anhand der Figur 7 erläutert, in der Zugehörigkeitsfunktionen Z1, Z2 und Z3 für die Sichtweitenklassen SK1, SK2 und SK3 eingezeichnet sind. Hat beispielsweise ein aktuell berechneter Merkmalswert MW den Wert 1, so fällt er in das Maximum der Zugehörigkeitsfunktion Z1. Der Merkmalswert MW = 1 hat also bezüglich der Sichtweitenklasse SK1 eine Zugehörigkeit ZG = 1. Für die Sichtweitenklasse SK2 beträgt die Zugehörigkeit ZG = 0,2, und für die Sichtweitenklasse SK3 beträgt die Zugehörigkeit ZG = 0,1. In der Figur 7 sind ebenfalls die Sichtweiten SW an der rechten Ordinate aufgetragen. Für jede der Zugehörigkeiten 1, 0,2 und 0,1 muß nun ein so großer Wichtungsfaktor bestimmt werden, so daß nach Multiplikation jeder Zugehörigkeit mit dem entsprechenden Wichtungsfaktor und anschließender Summation der gewichteten Zugehörigkeiten eine Sichtweite herauskommt, welche exakt der Sichtweite (50m) der Klasse SK1 entspricht.

Gemäß dem Verfahrensschritt 67 werden die für einen aktuellen Meßpunkt bestimmten Zugehörigkeiten zu den Sichtweitenklassen mit den, wie zuvor beschrieben, ermittelten Wichtungsfaktoren multipliziert. Liegt z.B. ein aktueller Merkmalswert MW = 2 vor, so läßt sich den Zugehörigkeitsverläufen in Figur 7 entnehmen, daß die Zugehörigkeit Z1 zur ersten Sichtweitenklasse 0,5, die Zugehörigkeit Z2 zur zweiten Sichtweitenklasse 0,45 und die Zugehörigkeit Z3 zur dritten Sichtweitenklasse 0,2 beträgt. Werden nun diese Zugehörigkeiten mit den im Verfahrensschritt 66 ermittelten Wichtungsfaktoren multipliziert und werden gemäß dem Verfahrensschritt 68 die gewichteten Klassen-Zugehörigkeiten aufsummiert, so ergibt sich für den Merkmalswert MW = 2 eine Sichtweite SW = 55m. Auf diese Weise läßt sich für jeden aktuellen Merkmalswert MW die aktuelle, nicht mehr an die einzelnen Sichtweitenklassen gebundene, Sichtweite SW bestimmen. Die strichlierte Kurve in Figur 7 gibt den kontinuierlichen Zusammenhang zwischen allen möglichen Merkmalswerten MW und den tatsächlichen aktuellen Sichtweiten SW wieder.

Die zuvor beschriebene kontinuierliche Sichtweitenmessung hat gegenüber der groben Bewertung in Sichtweitenklassen den Vorteil, daß die Sichtweitenmeßergebnisse als Stellgröße für geregelte Systeme im Fahrzeug verwendet werden können, welche von der aktuellen Sichtweite abhängen. Dazu können z.B. Systeme gehören, die automatisch das Abblendlicht, die Nebelscheinwerfer oder Nebelschlußleuchten schalten. Auch in Abstandsregelsystemen kann die gemessene Sichtweite berücksichtigt werden.

## Patentansprüche

1. Verfahren zur Sichtweitenmessung, insbesondere für Kraftfahrzeuge, wobei in einen Sichtweiten-Meßraum Licht ausgesendet, das im Meßraum rückgestreute Licht gemessen wird und die Zugehörigkeiten des Meßsignals zu mehreren vorgegebenen Sichtweitenklassen ermittelt werden, **dadurch gekennzeichnet,**
- **daß** ein zu jeder Sichtweitenklasse (SK1, SK2, SK3) gehörender Merkmalsbereich, die die Schwerpunkte (SP1, SP2, SP3) der einzelnen Sichtweitenklassen (SK1, SK2, SK3) bildenden Meßpunkte und Meßpunkte, welche die Punkte von Verbindungslinien (V12, V23) zwischen den Schwerpunkten (SP1, SP2, SP3) der aufeinanderfolgenden Sichtweitenklassen (SK1, SK2, SK3) bilden, ermittelt werden, wobei jeder einzelne Meßpunkt von ein oder mehreren Merkmalen (M1, M2) abhängt, die aus ein oder mehreren Abtastwerten eines Referenzmeßsignals abgeleitet sind,
- **daß** nach der gleichen Methode wie die Meßpunkte der Sichtweitenklassen (SK1, SK2, SK3) ein von ein oder mehreren Merkmalen (M1, M2) abhängiger aktueller Meßpunkt (MW) gebildet wird, wobei die Merkmale aus ein oder mehreren Abtastwerten eines aktuellen Meßsignals abgeleitet werden,
- **daß** vom jeweils aktuell ermittelten Meßpunkt (MP) eine Projektion auf diejenige Verbindungslinie (V12) durchgeführt wird, welche die Schwerpunkte (SP1, SP2, SP3) derjenigen beiden Sichtweitenklassen (SK1, SK2) miteinander verbindet, für die der Meßpunkt (MW) die beiden höchsten Zugehörigkeiten aufweist,
- und **daß** dem Projektionspunkt (PP) auf der Verbindungslinie (V12) die tatsächliche aktuelle Sichtweite zugeordnet wird.

2. Verfahren zur Sichtweitenmessung, insbesondere für Kraftfahrzeuge, wobei in einen Sichtweiten-Meßraum Licht ausgesendet, das im Meßraum rückgestreute Licht gemessen wird und die Zugehörigkeiten des Meßsignals zu mehreren vorgegebenen Sichtweitenklassen ermittelt werden, **dadurch gekennzeichnet,**
- **daß** der zu jeder Sichtweitenklasse (SK1, SK2, SK3) gehörende Merkmalsbereich und die die Schwerpunkte (SP1, SP2, SP3) der einzelnen Sichtweitenklassen (SK1, SK2, SK3) bildenden Meßpunkte ermittelt werden, wobei jeder einzelne Meßpunkt von ein oder mehreren Merkmalen (M1, M2) abhängt, die aus ein oder mehreren Abtastwerten eines Referenzmeßsignals abgeleitet sind,
- **daß** nach der gleichen Methode wie die Meßpunkte der Sichtweitenklassen (SK1, SK2, SK3) ein von ein oder mehreren Merkmalen abhängiger aktueller Meßpunkt (MP) gebildet wird, wobei die Merkmale aus ein oder mehreren Abtastwerten eines aktuellen Meßsignals abgeleitet werden,
- **daß** der Abstand (a) zwischen dem jeweils aktuell ermittelten Meßpunkt (MP) und dem Schwerpunkt (SP) derjenigen Sichtweitenklasse (SK2) berechnet wird, für die der aktuelle Meßpunkt (MW) die höchste Zugehörigkeit hat,
- **daß** dem ermittelten Abstand (a) ein Korrekturwert zugeordnet wird, um den die Sichtweite der Klasse (SK2) mit der höchsten Zugehörigkeit erhöht oder erniedrigt wird, um somit zu der tatsächlichen Sichtweite zu gelangen,
- und **daß** die Sichtweite der Klasse (SK2) mit der höchsten Zugehörigkeit erhöht/erniedrigt wird, wenn die Sichtweitenklasse (SK1) mit der zweitgrößten Zugehörigkeit oberhalb/unterhalb der Sichtweitenklasse (SK2) mit der höchsten Zugehörigkeit liegt.

3. Verfahren zur Sichtweitenmessung, insbesondere für Kraftfahrzeuge, wobei in einen Sichtweiten-Meßraum Licht ausgesendet, das im Meßraum rückgestreute Licht gemessen wird und die Zugehörigkeiten des Meßsignals zu mehreren vorgegebenen Sichtweitenklassen ermittelt werden, **dadurch gekennzeichnet,**
- **daß** der zu jeder Sichtweitenklasse (SK1, SK2, SK3) gehörende Merkmalsbereich und die die Schwerpunkte (SP1, SP2, SP3) der einzelnen Sichtweitenklassen (SK1, SK2, SK3) bildenden Meßpunkte ermittelt werden, wobei jeder einzelne Meßpunkt von ein oder mehreren Merkmalen (M1, M2) abhängt, die aus ein oder mehreren Abtastwerten eines Referenzmeßsignals abgeleitet sind,
- **daß** nach der gleichen Methode wie die Meßpunkte der Sichtweitenklassen (SK1, SK2, SK3) ein von ein oder mehreren Merkmalen (M1, M2) abhängiger aktueller Meßpunkt (MP) gebildet wird, wobei die Merkmale aus ein oder mehreren Abtastwerten eines aktuellen Meßsignals abgeleitet werden,
- **daß** die für den jeweils aktuellen erfaßten Meßpunkt (MP) ermittelten Zugehörigkeiten (ZG) zu allen Sichtweitenklassen mit Wichtungsfaktoren multipliziert werden,
- **daß** die Wichtungsfaktoren so gewählt werden, daß bei einer Multiplikation der Zugehörigkeiten (ZG) eines in den Schwerpunkt einer Sichtweitenklasse fallenden aktuellen Meßpunktes (MP) und nach anschließender Summation der Gewichtzugehörigkeiten (ZG) eine Sichtweite resultiert, die gleich der Sichtweitenklasse ist,
- und **daß** aus allen gewichteten Zugehörigkeiten eine Summe gebildet wird, welche dann als aktuelle Sichtweite angenommen wird.

4. Verfahren nach einem der Ansprüche 1, 2 oder 3, **dadurch gekennzeichnet, daß** die Merkmale (M1, M2) durch Linearkombination oder Mittelwertbildung oder Quotientenbildung oder Streuungsberechnung von mehreren Meßsignal-Abtastwerten entstehen.

5. Verfahren nach einem der Ansprüche 1, 2 oder 3, **dadurch gekennzeichnet, daß** jedes Merkmal (M1, M2) einem Meßsignal-Abtastwert entspricht.

## Claims

1. Method for visual range measurement, in particular for motor vehicles, light being emitted in a visual range measurement space, the light backscattered in the measurement space being measured, and the memberships of the measurement signal to a number of prescribed visual range classes being determined, **characterized**
- **in that** a feature area belonging to each visual range class (SK1, SK2, SK3) and the measurement points forming the centroids (SP1, SP2, SP3) of the individual visual range classes (SK1, SK2, SK3), and measurement points which form the points of connecting lines (V12, V23) between the centroids (SP1, SP2, SP3) of the consecutive visual range classes (SK1, SK2, SK3), are determined, each individual measurement point being a function of one or more features (M1, M2) which are derived from one or more samples of a reference measurement signal,
- **in that** according to the same method as the measurement points of the visual range classes (SK1, SK2, SK3) a current measurement point (MP) which is a function of one or more features (M1, M2) is formed, the features being derived from one or more samples of a current measurement signal,
- a projection is carried out from the respectively currently determined measurement point (MP) onto that connecting line (V12) which interconnects the centroids (SP1, SP2, SP3) of those two visual range classes (SK1, SK2) for which the measurement point (MP) has the two highest memberships,
- and **in that** the actual current visual range is assigned to the projection point (PP) on the connecting line (V12).

2. Method for visual range measurement, in particular for motor vehicles, light being emitted in a visual range measurement space, the light backscattered in the measurement space being measured, and the memberships of the measurement signal to a number of prescribed visual range classes being determined, **characterized**
- **in that** the feature area belonging to each visual range class (SK1, SK2, SK3) and the measurement points forming the centroids (SP1, SP2, SP3) of the individual visual range classes (SK1, SK2, SK3), are determined, each individual measurement point being a function of one or more features (M1, M2) which are derived from one or more samples of a reference measurement signal,
- **in that** according to the same method as the measurement points of the visual range classes (SK1, SK2, SK3) a current measurement point (MP) which is a function of one or more features (M1, M2) is formed, the features being derived from one or more samples of a current measurement signal,
- **in that** the distance (a) between the respectively currently determined measurement point (MP) and the centroid (SP) of that visual range class (SK2) for which the current measurement point (MP) has the highest membership is calculated,
- **in that** the determined distance (a) is assigned a correction value by which the visual range of the class (SK2) with the highest membership is raised or lowered in order thereby to arrive at the actual visual range,
- and **in that** the visual range of the class (SK2) with the highest membership is raised/lowered when the visual range class (SK1) with the second largest membership is above/below the visual range class (SK2) with the highest membership.

3. Method for visual range measurement, in particular for motor vehicles, light being emitted in a visual range measurement space, the light backscattered in the measurement space being measured, and the memberships of the measurement signal to a number of prescribed visual range classes being determined, **characterized**
- **in that** the feature area belonging to each visual range class (SK1, SK2, SK3) and the measurement points forming the centroids (SP1, SP2, SP3) of the individual visual range classes (SK1, SK2, SK3), are determined, each individual measurement point being a function of one or more features (M1, M2) which are derived from one or more samples of a reference measurement signal,
- **in that** according to the same method as the measurement points of the visual range classes (SK1, SK2, SK3) a current measurement point (MP) which is a function of one or more features (M1, M2) is formed, the features being derived from one or more samples of a current measurement signal,
- **in that** the memberships (ZG), determined for the respectively currently acquired measurement point (MP), to all the visual range classes are multiplied by weighting factors,
- **in that** the weighting factors are selected such that a visual range which is equal to the visual range class results upon multiplication of the memberships (ZG) of a current measurement point (MP) falling onto the centroid of a visual range class and after subsequent summation of the weight memberships (ZG),
- and **in that** a sum is formed from all the weighted memberships and is then taken as the current visual range.

4. Method according to one of Claims 1, 2 or 3, **characterized in that** the features (M1, M2) result from linear combination or averaging or quotient formation or dispersion calculation of a number of measurement signal samples.

5. Method according to one of Claims 1, 2 or 3, **characterized in that** each feature (M1, M2) corresponds to a measurement signal sample.

## Revendications

1. Procédé de mesure de la distance de visibilité notamment pour des véhicules automobiles, selon lequel on émet de la lumière dans un espace de mesure de distance de visibilité, on mesure la lumière renvoyée dans l'espace de mesure et on détermine l'appartenance du signal de mesure à plusieurs classes prédéfinies, de distances de visibilité,
**caractérisé en ce qu'**
on détermine une plage de caractéristiques appartenant à chaque classe de distance de visibilité (SK1, SK2, SK3) des centres de gravité (SP1, SP2, SP3) des points de mesure formant les différentes classes de distances de visibilité (SK1, SK2, SK3) et les points de mesure qui forment les points des lignes de liaison (V12, V23) entre les centres de gravité (SP1, SP2, SP3) des classes de distances de visibilité successives (SK1, SK2, SK3), chacun des différents points de mesure dépendant d'une ou plusieurs caractéristiques (M1, M2) déduites d'une ou plusieurs valeurs de détection d'un signal de mesure de référence,
- en appliquant le même procédé que celui relatif aux points de mesure des classes de distances de visibilité (SK1, SK2, SK3) on forme un point de mesure (MW) actuel dépendant d'une ou plusieurs caractéristiques (M1, M2), déduites d'une ou de plusieurs valeurs de détection d'un signal de mesure actuel,
- à partir du point de mesure (MP) déterminé actuellement on fait une projection sur la ligne de liaison (V12) qui relie les centres de gravité (SP1, SP2, SP3) des deux classes de distances de visibilité (SK1, SK2) pour lesquelles le point de mesure (MW) présente les deux appartenances les plus élevées et
- on associe la distance de visibilité actuelle, effective, au point de projection (PP) sur la ligne de liaison (v12).

2. Procédé de mesure de distance de visibilité notamment pour des véhicules automobiles selon lequel on émet de la lumière dans un espace de mesure de distance de visibilité, on mesure la lumière envoyée dans l'espace de mesure et on détermine l'appartenance du signal de mesure à plusieurs classes prédéterminées de distances de visibilité,
**caractérisé en ce qu'**
- on détermine la plage de caractéristiques appartenant à chaque classe de distances de visibilité (SK1, SK2, SK3) et les points de mesure qui forment les centres de gravité (SP1, SP2, SP3) des différentes classes de distances de visibilité (SK1, SK2, SK3), chacun des différents points de mesure dépendant d'une ou plusieurs des caractéristiques (M1, M2) déduites d'une ou plusieurs valeurs de détection d'un signal de mesure de référence,
- en appliquant le même procédé que celui concernant les points de mesure des classes de distances de visibilité (SK1, SK2, SK3) on forme un point de mesure actuel (MP) dépendant d'une ou plusieurs des caractéristiques, les caractéristiques étant déduites d'une ou plusieurs valeurs de détection d'un signal de mesure actuel,
- on calcule la distance (a) entre le point de mesure (MP) déterminé chaque fois actuellement et le centre de gravité (SP) de la classe de distances de visibilité (SK2) pour laquelle le point de mesure actuel (MW) présente l'appartenance la plus élevée,
- on associe une valeur de correction à la distance déterminée (a), valeur avec laquelle on augmente ou on abaisse la distance de visibilité de la classe (SK2) avec la plus grande appartenance pour arriver ainsi à la distance de visibilité effective et
- on augmente/abaisse la distance de visibilité de la classe (SK2) ayant l'appartenance la plus élevée si la classe de distances de visibilité (SK1) ayant la seconde appartenance la plus grande se situe au-dessus/en dessous de la classe de distances de visibilité (SK2) ayant l'appartenance la plus grande.

3. Procédé de mesure de distance de visibilité notamment pour des véhicules automobiles selon lequel on émet de la lumière dans un espace de mesure de distance de visibilité, on mesure la lumière envoyée dans l'espace de mesure et on détermine les appartenances du signal de mesure à plusieurs classes prédéfinies de distances de visibilité,
**caractérisé en ce qu'**
- on détermine la plage de caractéristiques appartenant à chaque classe de distances de visibilité (SK1, SK2, SK3) et les points de mesure qui forment les centres de gravité (SP1, SP2, SP3) des différentes classes de distances de visibilité (SK1, SK2, SK3), chacun des différents points de mesure dépendant d'une ou plusieurs caractéristiques (M1, M2) déduites d'une ou plusieurs valeurs de détection d'un signal de mesure de référence,
- en appliquant le même procédé que celui concernant les points de mesures des classes de distances de visibilité (SK1, SK2, SK3), on forme un point de mesure actuel (MP) dépendant d'une ou plusieurs caractéristiques (M1, M2), déduites d'une ou plusieurs valeurs de détection d'un signal de mesure actuel,
- on multiplie avec des coefficients de pondération les appartenances (ZG) à toutes les classes de distances de visibilité, appartenances déterminées pour chaque point de mesure saisi actuellement (MP),
- on sélectionne les coefficients de pondération pour obtenir une distance de visibilité par une multiplication des appartenances (ZG) d'un point de mesure (MP) actuel tombant sur un centre de gravité d'une classe de distances de visibilité et ensuite après sommation des appartenances pondérées (ZG), on obtient une distance de visibilité égale à la classe de distances de visibilité et
- on forme la somme de toutes les appartenances pondérées et on prend cette somme comme distance de visibilité actuelle.

4. Procédé selon l'une des revendications 1, 2, 3,
**caractérisé en ce que**
les caractéristiques (M1, M2) résultent d'une combinaison linéaire ou d'une formation de valeur moyenne ou d'une formation de quotient ou d'un calcul de dispersion de plusieurs valeurs de détection de signal de mesure.

5. Procédé selon l'une des revendications 1, 2, 3,
**caractérisé en ce que**
chaque caractéristique (M1, M2) correspond à une valeur de détection de signal de mesure.
